# EUROPEAN PATENT SPECIFICATION

(11) **EP 2 663 603 B1**
(45) Date of publication and mention of the grant of the patent: **03.11.2021**
(21) Application number: 12700655.9
(22) Date of filing: 13.01.2012
(51) Int. Cl.: C08J 11/06, C09D 7/80

(54) **METHOD FOR MANUFACTURING EMULSION PAINT**
VERFAHREN ZUR HERSTELLUNG VON EMULSIONSFARBE
PROCÉDÉ POUR LA FABRICATION DE PEINTURE ÉMULSION

(30) Priority: 14.01.2011 GB 201100626
(43) Date of publication of application: 20.11.2013
(73) Proprietor: Newlife Paints Limited, Worthing Sussex BN12 4AD (GB)
(72) Inventor: HARRISON, Keith, Ford Sussex BN18 0BD (GB)
(74) Representative: Schlich, George
(86) International application number: PCT/EP2012/050495
(87) International publication number: WO 2012/095520

(56) References cited:
- EP-A1- 0 889 100
- EP-A2- 0 390 464
- WO-A1-2005/047408
- WO-A2-2007/072502
- DE-C1- 4 028 905
- US-A- 4 096 061
- US-A1- 2001 006 021
- US-A1- 2010 186 631
- Max T. Wills: "Sampling Testing and Evaluation of Recyclable and Recycled Latex Paint", California Integrated Waste Management Board , 1 December 1995 (1995-12-01), Retrieved from the Internet: URL:http://www.calrecycle.ca.gov/publicati ons/documents/HHW%5C33195011.pdf [retrieved on 2016-11-17]

## Description

### Field

The present invention relates to a method for manufacturing paint, particularly from reclaimed paint, to apparatus for manufacturing paint and to paint made from reclaimed paint. The present invention relates especially to recycling of paint.

### Background

There is increasing environmental and moral pressure to reuse and recycle as high a percentage as possible of consumable products, one of which is paint. Landfill and other disposal costs are increasing, providing further incentive to reduce overall wastage, in the context of the invention, of paint and similar products.

It is known to carefully sort old and unused paint, to identify paint that is still in an acceptably useable condition, sorted paint above a certain quality threshold then being blended to provide paint that can be re-used instead of being wasted.

The supply of waste paint is variable and so there may be a variable proportion of paint that is suitable to be reused, there remaining a significant amount of paint that must be disposed of. Known methods may include rudimentary processing such as filtering but such methods are not capable of processing paint that has degraded, which must be discarded. The sorting must be done carefully and can be time consuming.

US 4096061 discloses a method of recovery and reuse of paint solids from waste water used in the production of new latex-based paint. The method includes the steps of adding a flocculant to the water to create a sludge of paint solids which can then be separated from the water. This sludge is then treated with a dispersing agent and used in the formation of new latex based paint.

DE 4028905 discloses a method of separating solids and liquids in paints, lacquers and solvents containing paint or lacquer. The method includes allowing particles to separate and treating the decanted fluid with alkali and then acid, and optionally a flocculating agent, to precipitate further solids. The liquid is then distilled.

Max T. Wills: "Sampling Testing and Evaluation of Recyclable and Recycled Latex Paint", California Integrated Waste Management Board, 1 December 1995 (Retrieved on 17 November 2016 from: http://www.calrecycle.ca.qov/publications/documents/HHW%5C33195011.pdf), discloses a number of tests conducted on recycled latex paints. US2010186631 discloses compounds for use in reducing odour in paints.

### Problem

An object of the present invention is to overcome or at least ameliorate one or more of the above-identified problems and in addition embodiments of the invention allow a higher proportion of the waste paint to be utilised. An object of particular embodiments of the invention is to provide methods of manufacture of paint that can be used for recycling of reclaimed or degraded paint. An object of specific embodiments is to provide a method for recycling of degraded, water-based emulsion paints, together with the paint obtained thereby.

### Invention

The invention accordingly provides a method for the manufacture of useable (or ready to use) paint, comprising the steps of:
(a) providing a paint precursor, comprising degraded paint; and
(b) treating the paint precursor by:
   testing the pH of the paint precursor and, if necessary, adjusting the pH to lie within a predetermined range of 7.5 to 10;
   adding an odour-reducing material selected from clay, and/or talc in an amount of from 0.5 - 30% w/w;
   testing the viscosity of the paint precursor and, if necessary, adjusting the viscosity to lie within the following ranges, when measured using a Brookfield DV-II viscometer installed with a LV-4 spindle rotating at 0.6 revolutions per minute,
   for matt grade paint, from 5.5 × 10³ centipoise to 13 × 10³ centipoise, measured after the paint precursor is allowed to stand for 5 minutes and from 12 × 10³ centipoise to 22 × 10³ centipoise, measured after the paint precursor is allowed to stand for an hour;
   for silk/soft sheen grade paint, from 2 × 10³ centipoise to 4 × 10³ centipoise, measured after the paint precursor is allowed to stand for 5 minutes, and from 4 × 10³ centipoise to 9 × 10³ centipoise, measured after the paint precursor is allowed to stand for an hour;
   for an alternative silk/soft sheen grade paint, from 5 × 10³ centipoise to 10 × 10³ centipoise, measured after the paint precursor is allowed to stand for 5 minutes and from 10 × 10³ centipoise to 15 × 10³ centipoise, measured after the paint precursor is allowed to stand for an hour; and
   testing one or more of the following properties of the paint precursor and, if necessary, adjusting the property or properties to lie with a predetermined range:
      (i) specific gravity and;
      (ii) solids content;

Whereby the predetermined range for specific gravity is 1 to 2 and the predetermined range for solids content is 20% w/w to 55% w/w;
whereby at least one of the pH, specific gravity, solids content, viscosity and opacity of the paint precursor is adjusted, thereby producing paint.

Methods of the invention enable degraded paint to be recycled to produce paint that has substantially or entirely similar properties to non-degraded paint. Thus, degraded paint can be obtained from local amenity paint disposal sites and recycled. This source provides an abundant amount of hitherto unusable, waste paint, much of which would otherwise be disposed of as general refuse or at waste destruction or landfill sites. Degraded/waste paint can also be obtained from commercial sources.

The degraded paint is typically degraded water-based emulsion and is further typically characterised by one or more or in extreme cases all of the following degradations: the presence of large foreign objects (e.g. rubber gloves, paint brushes or parts thereof or container opening tools); uneven texture, at least in part caused by the presence of pieces of hardened paint; paint that has split or separated into its component parts; the presence of paint breakdown products (some of which may create an unpleasant odour, often sulphurous); a pH outside a predetermined range (generally degraded paint has a pH that is too low); a solids content outside a pre-determined range (generally slightly high in degraded paint); a viscosity outside a pre-determined range (generally too low in degraded paint); and a specific gravity outside a pre-determined range (generally too high in degraded paint).

The degraded paint is regarded as unusable in its supplied form and the quality of the feedstocks naturally varies according to supply. However, the present invention enables accurate restoration of one or more of the degraded properties of the paint to produce a recycled paint that is usable and acceptably consistent in quality. A high percentage of recycling of degraded paint becomes possible.

The precursor paint of the invention typically comprises paint derived from one batch of degraded paint, or several batches of paint of similar or differing quality and degradation, which are combined. At larger scales, a multitude of paint feedstocks with varying degrees of degradation are combined in recycling methods of the invention.

In embodiments of the invention, the paint precursor is subjected to a preliminary step of treating the paint precursor by adding a pH adjusting material and blending the material into the paint precursor. This preliminary step can be carried out prior to pH testing and may advantageously minimise the number of subsequent steps. It typically comprises treating the paint precursor with 5% w/w or less, preferably 2% w/w or less, more preferably 1 - 2% w/w pH adjusting material.

The pH indicates the stability, viscosity and safety of the paint. If the pH of the paint is too low then it may separate or may become too thin to be usable and, if very acidic, the paint may become corrosive, and may be an indication of adverse biological degradation. In extreme cases, if the pH of the paint is too high then the paint may be regarded as too hazardous to use. The predetermined pH range for the paint of the invention is preferably pH 8 - 10, more preferably pH 8.2 - 9.7, most preferably pH 8.4 - 9.

The pH is typically adjusted by adding to the paint precursor a material that alters its pH and blending the material into the paint precursor. To check this process, the paint can be remixed and retested, and if necessary re-adjusted, until a suitable pH is achieved. As the pH of degraded paint often becomes too low in storage, the pH-adjusting material is typically alkaline, preferably alkaline clay, ground marble and/or alkaline solution for example ammonium hydroxide, NaOH, KOH, calcium carbonate or triethanolamine, all optionally in solution. In an example described below, ammonium hydroxide was used. In another example described below, ground marble was used. However, the invention may, as appropriate, include correcting the pH of overly alkaline degraded paint by adding an acidic material. In this case, the pH-adjusting material is suitably acidic clay and/or acidic solution, preferably HCI.

The pH is optionally retested and if necessary readjusted after subsequent processing steps, for example testing and adjusting of specific gravity, solids content and/or viscosity as described below.

The specific gravity, solids content and viscosity of the paint each contribute to the thickness of the paint. In storage, paint can degrade in one or more different ways. Paint may become less viscous due to a drop in pH and degradation. Paint may become thicker due to loss of water or other solvents.

Paint thinning can yield a paint that has poor opacity, and thus a poor ability to cover, for example, dirt, unwanted colours, graffiti and other marks on the surface to be painted. In addition, paint thinning can produce a paint that does not adhere well to the painting tool, resulting in inconvenient application, or to the surface to be painted, resulting in sagging or dripping of the applied paint. Paint thickening can yield paint that has poor spreading properties or is otherwise unusable.

By following methods of the present invention, it is possible to test and restore each thickness property to produce a paint of comparable quality to non-degraded paint, and determining the thickness properties enables the manufacturing of paint of a predetermined and acceptable specification from reclaimed paint of variable and unacceptable quality. The specific gravity, solids content and viscosity of the paint may interact to produce an overall thickness and hence adjusting one property may mean a related property needs no or reduced adjustment to produce acceptably thick paint.

The predetermined specific gravity range of paint of the invention is 1 - 2. A predetermined specific gravity range of paint of the invention for matt grade paint is typically 1.2 ― 2, preferably 1.3 - 1.6, more preferably 1.38 - 1.5. A predetermined specific gravity range of paint of the invention for silk/soft sheen (soft sheen also known as eggshell) grade paint is typically 1 - 1.4, preferably 1.1 - 1.3, more preferably 1.14 - 1.2.

The specific gravity is typically adjusted by adding to the paint precursor a material that alters the specific gravity, and blending the material into the paint precursor. This material may be one or more of particulate solid matter, an aqueous suspension of particulate solid matter, thicker paint, thinner paint and water. The particulate solid matter preferably comprises one or more of clay, chemically or heat modified clay, talcs, and calcium carbonate. Suitable clays may comprise attapulgite and/or may be kaolin-type clays. Material of higher specific gravity than the paint precursor may be added to raise the specific gravity of the paint precursor, and material of lower specific gravity than the paint precursor may be added to lower the specific gravity of the paint precursor. In an example of the invention, set out below in more detail, an aqueous suspension of particulate solid matter, specifically clays, and having relatively low specific gravity was mixed into degraded paint having too high a specific gravity, to yield paint having acceptable specific gravity.

The predetermined solids content range of the paint of the invention is 20% w/w to 55% w/w. A predetermined solids content range of the paint for matt grade paint of the invention is typically 30% w/w to 55% w/w, preferably 35 - 55% w/w, more preferably 38 - 50% w/w. A predetermined solids content range of the paint for silk/soft sheen grade paint of the invention is typically 20% w/w to 55% w/w, preferably 25 - 45% w/w, more preferably 27 - 40% w/w.

The solids content is typically adjusted by adding to the paint precursor a material that alters the solids content, and blending the material into the paint precursor. This material may be one or more of particulate solid matter, an aqueous suspension of particulate solid matter, thicker paint, thinner paint and water. The particulate solid matter preferably comprises one or more of clay, chemically or heat modified clay, talc, and calcium carbonate. Suitable clays may comprise attapulgite and/or may be kaolin-type clays. Material of higher solids content than the paint precursor may be added to raise the solids content of the paint precursor, and material of lower solids content than the paint precursor may be added to lower the solids content of the paint precursor.

The viscosity of the paint may change according to how it is handled and the time elapsed since handling has stopped. Accordingly, the present invention comprises testing and adjusting the viscosity of the paint precursor and, if necessary, adjusting the viscosity at one or more time points after the paint precursor has been mixed. Performing this procedure at more than one time point advantageously gives a more accurate impression of how the paint will perform after a period of storage. In the Examples below, the viscosity was measured using a Brookfield DV-II viscometer installed with a LV-4 spindle rotating at 0.6 revolutions per minute. This produced a shear rate of around 0.125 sec⁻¹.

For matt grade paint, a first predetermined viscosity range of the paint of the invention is preferably 6 × 10³ centipoise to 13 × 10³ centipoise, preferably 6 - 8 × 10³ centipoise, optionally 8 × 10³ centipoise to 13 × 10³ centipoise, preferably 8.5 - 13 × 10³ centipoise, measured after the paint precursor is allowed to stand for 5 minutes. Separately, a second predetermined viscosity range of the matt paint of the invention is, yet more preferably 12 - 18 × 10³ centipoise, measured after the paint precursor is allowed to stand for an hour.

For silk/soft sheen grade paint, a first predetermined viscosity range of the paint of the invention is preferably 2.5 - 4 × 10³ centipoise, measured after the paint precursor is allowed to stand for 5 minutes. Separately, a second predetermined viscosity range of the silk/soft sheen paint of the invention is , more preferably 5 ― 9 × 10³ centipoise, measured after the paint precursor is allowed to stand for an hour.

In an alternative embodiment for silk/soft sheen grade paint, a first predetermined viscosity range of the paint of the invention is preferably 6 × 10³ centipoise to 10 × 10³ centipoise, more preferably 7 × 10³ centipoise to 10 × 10³ centipoise, measured after the paint precursor is allowed to stand for 5 minutes.

The viscosity is typically adjusted by adding to the paint precursor a material that alters the viscosity, and blending the material into the paint precursor. This material may be one or more of more viscous paint, less viscous paint, clay, cellulose or derivatives thereof, polysaccharide and acrylic. Examples of materials that may be used are carboxymethylcellulose, modified carboxymethylcellulose, carboxypropylcellulose, modified carboxypropylcellulose, hydroxyethylcellulose, modified hydroxyethylcellulose, xantham gum and Additol (RTM) VXW 6388 (Cytec Industries Inc., Woodland Park, NJ, USA). Certain additives, e.g. modified hydroxyethylcellulose are further advantageous as they are resistant to bacterial degradation. Material of higher viscosity than the paint precursor may be added to raise the viscosity of the paint precursor, and material of lower viscosity than the paint precursor may be added to lower the viscosity of the paint precursor. As the pH also affects viscosity, the material to adjust the viscosity may also preferably be one or more of ammonium hydroxide, triethanolamine, NaOH, KOH, calcium carbonate, each optionally as a solution, and ground marble.

In embodiments of the invention, the opacity of the paint is directly monitored and adjusted as necessary at one or more points in the process. The opacity is typically monitored by painting out a sample of paint or paint precursor onto a surface onto which a standard high contrast pattern is printed, then the paint or paint precursor is allowed to dry. The extent to which the pattern is visible through the dried paint provides a measure of opacity. The apparent level of opacity is compared to samples of known opacity, and adjusted, as appropriate to achieve the required opacity, by adding materials which adjust the specific gravity and/or solids content. Preferred additives include one or more of modified clays and titanium dioxide.

As some of the materials used to adjust the pH and/or other paint properties affect more than one of pH and/or other paint properties, then it is preferable to test the pH and/or other paint properties after each pH and/or other paint property adjustment. It will be understood that the testing and adjusting to obtain recycled paint having values for pH, specific gravity, solids content, viscosity and opacity falling within acceptable ranges is generally iterative.

To produce a paint of a specific colour, the present invention preferably comprises a pre-processing step, wherein the paint precursor is prepared by combining two or more feedstocks, selected so as to produce, when combined, a paint precursor of a desired colour. This reduces the necessity to use additional colorants in the final product. For example, white paint may be mixed with other white paint, magnolia paint may be mixed with other magnolia paint, and so on. The colour may also be adjusted by the addition of colouring agents such as pigments, or colours chosen from the waste paints.

To produce a paint having a specific finish on the painted surface when dry, such as matt, eggshell or silk, the present invention preferably comprises a pre-processing step, wherein the paint precursor is prepared by combining two or more feedstocks, selected so as to produce, when combined, a paint precursor that will produce the desired finish. Accordingly, matt paint may be mixed with other matt paint, eggshell paint may be mixed with other eggshell paint, and silk paint may be mixed with other silk paint, for example.

To minimise the amount of processing to correct one or more of pH, viscosity, solids content, specific gravity and opacity of the paint, the method may comprise a pre-processing step, wherein the paint precursor is prepared by combining two or more feedstocks, selected so as to produce, when combined, a paint precursor that has pH and/or properties falling in the preferred ranges of one or more of pH, viscosity, solids content. specific gravity and opacity.

To simplify subsequent processing, it has been found that it is advantageous to include in the process a preliminary step of treating the paint precursor with a pH adjusting material.

The present invention may further comprise adding one or more preservatives to prevent the paint from degradation, enhancing shelf life. Suitable "in-can" preservatives comprise an antimicrobial agent, preferably an antibacterial agent and/or antifungal agent, more preferably a broad-spectrum antibacterial agent. Such preservatives prevent the degradation of the paint by avoiding the breakdown of the paint components (e.g. cellulose or derivatives thereof) by microbes, and are distinguished from preservatives that primarily alter properties of the finished painted surface.

A suitable preservative may comprise one or more of 1,2-benzisothiazolin-3-one (BIT), zinc 2-pyridinethiol-1-oxide (zinc pyrithione), 2-methyl-4-isothiazolin-3-one (MIT), formaldehyde and formaldehyde-releasing preservatives. In addition to preventing the new growth of bacteria in the paint, BIT also kills bacteria that have already grown in the paint feedstock. Similarly, in addition to preventing the new growth of fungus in the paint, zinc pyrithione also kills fungus that have already grown in the paint feedstock.

It is an option to use a combination of two or more preservatives to control microbes that may already be present in the degraded paint. One such combination is BIT and zinc pyrithione. A preferred combination is BIT and MIT.

The method of the invention may optionally comprise the addition of up to 1% w/w of one or more in-can preservative, preferably up to 0.5% w/w, more preferably up to 0.3% w/w.

Optionally, alternative antimicrobial agents may be used to prevent the growth of, or simply kill, microbes, e.g. viruses, bacteria (such as MRSA) and/or fungi, that come into contact with the finished painted surface. Suitable "surface" antimicrobial agents may comprise one or more of silver, silver-containing compounds, zinc pyrithione (zinc 2-pyridine-thiol-1-oxide), 1,2-benzisothiazolin-3-one (BIT) and 2-methyl-4-isothiazolin-3-one (MIT), and may form a dry-film preservative. This produces a paint that is particularly suitable for specialist applications, such as painting of damp areas (e.g. bathrooms), external areas or places where aseptic conditions are preferred (e.g. hospitals).

The method of the invention may optionally comprise the addition of up to 1% w/w of one or more surface antimicrobial agent, preferably up to 0.5% w/w, more preferably up to 0.3% w/w.

In particular methods of the invention, preservatives to enhance shelf-life and to prevent microbial growth on the finished painted surface are both added during manufacture of the paint.

The invention preferably comprises mixing of the paint precursor by blending prior to treating. The blending preferably homogenises the paint. The blending further preferably is carried out so as to reduce the mean particle size of the paint. In examples carried out a shear mixer is used to reduce particle size in the degraded paint. Homogenising, as well as combining the feedstocks well, also, in part, may temporarily reverse the effects of any paint degradation, enabling further processing to take place.

Reducing the mean particle size of the paint advantageously enables the method of the invention to recycle the material present in the pieces of hardened paint in the degraded paint, which would otherwise be required to be taken out of the finished product and disposed of in landfill. This particle size reduction is separate from filtration and may be used in conjunction with prior or subsequent filtration steps. The shear-mixing of the invention is preferably carried out using one or more mixing heads, each comprising a rotor and a stator. The shearing force is provided at the clearance between the rotor and stator, which is preferably 1 mm or less, more preferably 0.5 mm or less, most preferably 0.3 mm or less. Referring to examples carried out in operation of the invention, good homogenisation and particle size reduction have been achieved using a rotor spinning at 1,000 rpm or faster, 2,000 rpm or faster, more preferably 3,000 or faster. Indeed, shear-mixing is more efficient at rotor speeds of 5,000 rpm or faster. However, it is preferred not to shear for too long as this may damage the stability of the emulsion. Accordingly, the duration of shear-mixing should typically not exceed 30 minutes of high shearing action.

The method of the invention optionally comprises filtering the paint, before and/or after treating the paint, preferably at least after treating the paint. The filtering is typically carried out using a sieve and the filter preferably has a pore size of 300 µm or less, more preferably 250 µm or less, even more preferably 200 µm or less, still more preferably 150 µm or less. The pore size of filter used will be in part a trade off between the desired finish of the paint product and filtering speed. For example, to make paint for spray applications filtering is generally through a finer sieve (e.g. 200 µm or less, or 150 µm or less) to avoid blocking the spray apparatus, whereas paint filtered through larger pores is generally suitable for the manufacture of paint for brush or roller only application.

The filtering is preferably mechanically-assisted to, for example, increase the filter flow rate. Typically, the filtering is assisted by vibrating the filter, preferably in an axis approximately perpendicular to the paint flow. The filtering may also be assisted by mixing the paint or by other means of inputting energy into the paint, such as sonication.

The filtering is driven preferably by gravity under atmospheric pressure, although it may be driven by pressure, preferably less than 10 bar, more preferably less than 1 bar, even more preferably less than 500 mbar, still more preferably less than 300 mbar.

The present invention comprises adding one or more odour-reducing materials to reduce the typically sulphurous odour released by the paint breakdown products and/or other components. The odour-reducing material is selected from clay, and/or talc and is added in an amount of from 0.5-30% w/w. For example, the odour-reducing material comprises fuller's earth, attapulgite type clay or molecular sieves, e.g. zeolites. The odour-reducing materials are, more preferably present in the range 1 - 10% w/w, and still more preferably 1 - 5% w/w.

The present invention may further comprise the addition of materials to the paint to obtain a more durable, harder paint finish. Suitable materials for this purpose include resin, preferably acrylic. When resin is added to increase durability and hardness, it is typically added to a level of up to 20% w/w, preferably up to 10% w/w, more preferably up to 5% w/w. Other materials include PTFE dispersions, heat, mica or chemically modified clays.

Still further, the present invention provides recycled paint, made according to the methods disclosed herein. Paint is hence provided which comprises:
(i) one or more odour producing paint breakdown products; and
(ii) one or more odour-reducing agents,
wherein the odour reducing material comprises fuller's earth, attapulgite type clay or zeolites and the odour-reducing material is present in the range 1-10% w/w.

The pH of the paint is preferably pH 8 or more. Paint of the invention generally has the following properties: the pH of the paint is within the range pH 8 - 10, the solids content of the paint is at least 20% w/w to 50% w/w, and the specific gravity of the paint is within the range 1 - 2.

The viscosity of matt paint is 6 × 10³ centipoise to 13 × 10³ centipoise, preferably 8 × 10³ centipoise to 13 × 10³ centipoise, more preferably 8.5 × 10³ centipoise to 13 × 10³ centipoise, measured after being allowed to stand for five minutes, the viscosity of the paint is 10 × 10³ centipoise to 22 × 10³ centipoise measured after being allowed to stand for an hour, the solids content of the paint is within the range 35 - 55% w/w, and the specific gravity of the paint is within the range 1.3 - 1.6. The viscosity of silk/soft sheen paint is at least 2.5 × 10³ centipoise, preferably at least 6 × 10³ centipoise, more preferably at least 7 × 10³ centipoise, after standing for 5 minutes and at least 5 × 10³ centipoise, preferably at least 8 × 10³ centipoise, more preferably at least 10 × 10³ centipoise, measured after standing for an hour, the solids content of the silk/soft sheen in the range 27 - 40% w/w and the specific gravity of the paint in the range 1.0 - 1.4.

Paint may also comprise one or more in-can preservatives, each preferably present at up to 1% w/w, preferably up to 0.5% w/w, more preferably up to 0.3% w/w, being an antifungal agent and/or an antibacterial agent.

Paint may optionally comprise one or more surface antimicrobial agent, each preferably present at up to 1% w/w, preferably up to 0.5% w/w, more preferably up to 0.3% w/w, being an antifungal agent and/or an antibacterial agent.

Other optional and preferred features of the method apply equally to the paint of the application.

### EXAMPLES

### Protocol for recycling paint

Sort degraded paint according to colour, whether the paint was originally intended to produce a matt, soft sheen or silk finish, whether the paint was originally intended for the trade or non-trade retail markets (an indication of original properties), and also the volatile organic content (VOC) of the paint, indicated on the original packaging.

Select degraded paint approximately of the desired colour, finish and quality and remove obvious detritus.

Transfer paint into a container to form the paint precursor and add from 1 to 10 % w/w antibacterial agent as preservative and, if desired, from 1 to 10 % w/w surface antimicrobial agent.

Blend thoroughly using particle size reduction apparatus, ensuring all paint is thoroughly homogenised.

### - For matt paint

Test the pH and if needed adjust to be within the range pH 8.4-9; reblend.

Test and adjust one or more of specific gravity and viscosity:
Specific gravity
   Test the specific gravity and if needed adjust to be within the range 1.38-1.5; reblend.
Viscosity
   Allow to settle for 5 minutes and test the viscosity and if needed adjust to be within the range 6―8 × 10³ centipoise; reblend.
   Allow to settle for an hour and test the viscosity and if needed adjust to be within the range 12―18 × 10³ centipoise; reblend.
pH
   Optionally, retest and readjust if necessary.

Add 1-3% w/w odour-absorbing agent; reblend.

Optional: to obtain a more durable, harder finish, add resin to a level of up to 10% w/w and reblend.

Optional: carry out final testing of pH, colour and specific gravity and if needed make fine adjustments to be within the above desired predetermined ranges, and reblend. Filter the final product according to its intended use (e.g. 150 or 200 µm filter) under atmospheric pressure using vibrating sieve, then package in standard paint containers, label and seal.

### - For silk or soft sheen paint

Test the pH and if needed adjust to be within the range pH 8.4-9; reblend.

Test and adjust one or more of specific gravity and viscosity:
Specific gravity
   Test the specific gravity and if needed adjust to be within the range 1.14-1.2; reblend.
Viscosity
   Allow to settle for 5 minutes and test the viscosity and if needed adjust to be within the range 2.5―4 × 10³ centipoise; reblend.
   Allow to settle for an hour and test the viscosity and if needed adjust to be within the range 5―9 × 10³ centipoise; reblend.
pH
   Optionally, retest and readjust if necessary.

Add 1-3% w/w odour-absorbing agent; reblend.

Optional: to obtain a more durable, harder finish, add resin to a level of up to 10% w/w and reblend.

Optional: carry out final testing of pH, colour and specific gravity and if needed make fine adjustments to be within the above desired predetermined ranges, and reblend. Filter the final product according to its intended use (e.g. 150 or 200 µm filter) under atmospheric pressure using vibrating sieve, then package in standard paint containers, label and seal.

### Alternative protocol for recycling paint

Sort degraded paint according to colour, whether the paint was originally intended to produce a matt, soft sheen or silk finish, whether the paint was originally intended for the trade or non-trade retail markets (an indication of original properties), and also the volatile organic content (VOC) of the paint, indicated on the original packaging.

Select degraded paint approximately of the desired colour, finish and quality and remove obvious detritus.

Transfer paint into a container to form the paint precursor and add up to 1% w/w antimicrobial agent as preservative and, if desired, up to 1% w/w surface antimicrobial agent.

Add 1 - 2% w/w pH adjusting material to adjust and/or buffer the pH.

Blend thoroughly using particle size reduction apparatus, ensuring all paint is thoroughly homogenised.

### - For matt paint

Test the pH and if needed adjust to be within the range pH 8.2-9.7; reblend.

Test and adjust one or more of specific gravity, viscosity and opacity:
Specific gravity
   Test the specific gravity and if needed adjust to be within the range 1.38-1.5; reblend.
Viscosity
   Allow to settle for 5 minutes and test the viscosity and if needed adjust to be within the range 8 ― 13 × 10³ centipoise; reblend.
   Allow to settle for an hour and test the viscosity and if needed adjust to be within the range 10 ― 22 × 10³ centipoise; reblend.
Opacity
   Optionally, paint a sample onto card on which a high-contrast pattern is printed, allow to dry and compare level of visibility of pattern against standards; increase opacity by adding materials that increase solids content and/or specific gravity; reblend.
pH
   Optionally, retest and readjust if necessary.

Add 1-3% w/w odour-absorbing agent; reblend.

Optional: to obtain a more durable, harder finish, add resin to a level of up to 10% w/w and reblend.

Optional: carry out final testing of pH, colour and specific gravity and if needed make fine adjustments to be within the above desired predetermined ranges, and reblend.

Filter the final product according to its intended use (e.g. 150 or 200 µm filter) under atmospheric pressure using vibrating sieve, then package in standard paint containers, label and seal.

### - For silk or soft sheen paint

Test the pH and if needed adjust to be within the range pH 8.2-9.7; reblend.

Test and adjust one or more of specific gravity, opacity and viscosity:
Specific gravity
   Test the specific gravity and if needed adjust to be within the range 1.14-1.2; reblend.
Viscosity
   Allow to settle for 5 minutes and test the viscosity and if needed adjust to be within the range 6 - 10 × 10³ centipoise; reblend.
   Allow to settle for an hour and test the viscosity and if needed adjust to be within the range 8 - 15 × 10³ centipoise; reblend.
Opacity
   Optionally, paint a sample onto card on which a high-contrast pattern is printed, allow to dry and compare level of visibility of pattern against standards by eye or using a reflectometer; increase opacity by adding materials that increase solids content and/or specific gravity; reblend.
pH
   Optionally, retest and readjust if necessary.

Add 1-3% w/w odour-absorbing agent; reblend.

Optional: to obtain a more durable, harder finish, add resin to a level of up to 10% w/w and reblend.

Optional: carry out final testing of pH, colour and specific gravity and if needed make fine adjustments to be within the above desired predetermined ranges, and reblend.

Filter the final product according to its intended use (e.g. 150 or 200 µm filter) under atmospheric pressure using vibrating sieve, then package in standard paint containers, label and seal.

### Example 1

Pots of degraded paint were collected from local amenity waste paint disposal centres and sorted according to colour, degree of degradation, whether the paint was originally intended to produce a matt, eggshell or silk finish, and whether the paint was originally intended for the trade or non-trade retail markets (an indication of original properties).

Degraded paint (~250 kg) that was all water-based, white matt emulsion was selected and obvious detritus was removed from the pots.

The paint was transferred and combined in a 220 litre barrel to form the paint precursor and 1.25 kg of Arch (RTM) Proxel (RTM) BZ Plus Preservative, a mixture of 1,2-benzisothiazolin-3-one (antibacterial agent) and zinc 2-pyridine-thiol-1-oxide (anti fungal agent), was added to act as an in-can preservative.

The resulting mix was blended by shear-mixing for 15 minutes using a single mixing head, moved throughout the mix sideways and up and down to ensure complete mixing. The clearance of the mixing head's rotor and stator was 0.5 mm, rotor speed was 3,500 rpm.

After blending, the pH was measured and adjusted to be approximately pH 8.7 by addition of ammonium hydroxide, retesting and repeating until this pH was reached.

The specific gravity was next measured and adjusted to be approximately 1.45 by addition of an aqueous suspension of heat-modified attapulgite, retesting and repeating until this level was reached.

The paint precursor was blended again and allowed to settle and five minutes after blending had finished the viscosity was measured using a Brookfield DV-II viscometer installed with an LV-4 spindle rotating at 0.6 revolutions per minute. The viscosity was slightly lower than 6 × 10³ centipoise and was adjusted by addition of carboxymethylcellulose, retesting and repeating until after 5 minutes of settling the viscosity was approximately 6 × 10³ centipoise.

The viscosity was next measured an hour after blending had last finished and further carboxymethylcellulose added so that the viscosity after an hour of settling was approximately 15 × 10³ centipoise.

The paint precursor was then re-blended, while adding 1% w/w attapulgitecontaining clay to act as an odour-absorbing agent.

The paint was then filtered using a 200 µm vibrating sieve filter (Russell Finex), under atmospheric pressure and lateral vibration, then dispensed into standard 1L paint containers and sealed and labelled, ready for use.

### Example 2

Pots of degraded paint were collected from local amenity waste paint disposal centres and sorted according to colour, degree of degradation, whether the paint was originally intended to produce a matt, eggshell or silk finish, and whether the paint was originally intended for the trade or non-trade retail markets (an indication of original properties).

Degraded paint (~250 kg) that was all water-based, white matt emulsion was selected and obvious detritus was removed from the pots.

The paint was transferred and combined in a 220 litre barrel to form the paint precursor and 0.5 kg Thor Acticide (RTM) MBS biocide, a mixture of 1,2-benzisothiazolin-3-one and 2-methyl-4-isothiazolin-3-one, was added to act as an in-can preservative.

Then 0.5 kg white ground marble was added to the paint to adjust and/or buffer the pH.

The resulting mix was blended by shear-mixing for 15 minutes using a single mixing head, moved throughout the mix sideways and up and down to ensure complete mixing. The clearance of the mixing head's rotor and stator was 0.5 mm, rotor speed was 3,700 rpm.

After blending, the pH was measured and adjusted to be approximately pH 9.0 by addition of ground marble, retesting and repeating until this pH was reached.

The specific gravity was next measured and adjusted to be approximately 1.35 by addition of an aqueous suspension of heat-modified attapulgite, retesting and repeating until this level was reached.

The paint precursor was blended again and allowed to settle and five minutes after blending had finished the viscosity was measured using a Brookfield DV-II viscometer installed with an LV-4 spindle rotating at 0.6 revolutions per minute. The viscosity was around 5.5 and was adjusted by addition of carboxymethylcellulose, retesting and repeating until after 5 minutes of settling the viscosity was approximately 8.5.

The viscosity was next measured an hour after blending had last finished and further carboxymethylcellulose added so that the viscosity after an hour of settling was approximately 14 × 10³ centipoise.

The opacity was then assessed and adjusted. To do this, a sample of the paint was painted onto a standard test card on which a high-contrast pattern is printed (Zehntner, Sissach, Switzerland), allowed to dry and the level of pattern visibility against standards was compared by eye, The opacity of the paint was increased by adding modified clay, the paint was reblended and the opacity retested using the same method. This was repeated iteratively until the required opacity was achieved.

The paint precursor was then re-blended, while adding 1% w/w attapulgitecontaining clay to act as an odour-absorbing agent.

The paint was then filtered using a 200 µm vibrating sieve filter (Russell Finex), under atmospheric pressure and lateral vibration, then dispensed into standard 1L paint containers and sealed and labelled, ready for use.

The present invention hence provides methods for recycling emulsion paint, to obtain consistent quality useable paint from a feed comprising degraded paint, together with the paint thus obtained.

## Claims

1. A method of recycling waste emulsion paint for the manufacture of useable paint, comprising the steps of:
(a) providing a paint precursor, comprising degraded paint; and
(b) treating the paint precursor by:
testing the pH of the paint precursor and, if necessary, adjusting the pH to lie within a predetermined range of 7.5 to 10;
adding an odour-reducing material selected from clay, and/or talc in an amount of from 0.5 - 30% w/w;
testing the viscosity of the paint precursor and, if necessary, adjusting the viscosity to lie within the following ranges, when measured using a Brookfield DV-II viscometer installed with a LV-4 spindle rotating at 0.6 revolutions per minute,
for matt grade paint, from 5.5 × 10³ centipoise to 13 × 10³ centipoise, measured after the paint precursor is allowed to stand for 5 minutes and from 12 × 10³ centipoise to 22 × 10³ centipoise, measured after the paint precursor is allowed to stand for an hour;
for silk/soft sheen grade paint, from 2 × 10³ centipoise to 4 × 10³ centipoise, measured after the paint precursor is allowed to stand for 5 minutes, and from 4 × 10³ centipoise to 9 × 10³ centipoise, measured after the paint precursor is allowed to stand for an hour;
for an alternative silk/soft sheen grade paint, from 5 × 10³ centipoise to 10 × 10³ centipoise, measured after the paint precursor is allowed to stand for 5 minutes and from 10 × 10³ centipoise to 15 × 10³ centipoise, measured after the paint precursor is allowed to stand for an hour; and
testing one or more of the following properties of the paint precursor and, if necessary, adjusting the property or properties to lie within a predetermined range:
(i) specific gravity and;
(ii) solids content,
whereby the predetermined range for specific gravity is 1 to 2 and the predetermined range for solids content is 20% w/w to 55% w/w;
whereby at least one of the pH, specific gravity, solids content and viscosity of the paint precursor is adjusted, thereby producing paint.

2. A method according to claim 1, whereby the opacity of the paint precursor is tested and, if necessary, adjusted, thereby producing paint.

3. A method according to any preceding claim, comprising a preliminary step of treating the paint precursor with between 1% w/w and 5% w/w pH adjuster.

4. A method according to claim 3, wherein the preliminary step of treating the paint precursor with pH adjuster is carried out prior to pH testing.

5. A method according to any preceding claim, wherein the method is for the manufacture of matt grade paint and wherein the predetermined range for the specific gravity of the matt grade paint is 1.3 - 1.6.

6. A method according to any preceding claim, wherein the method is for the manufacture of matt grade paint and wherein the predetermined range for the solids content of the matt grade paint is 35 - 55% w/w.

7. A method according to any preceding claim, wherein the method is for the manufacture of matt grade paint and wherein the predetermined range for the viscosity of the matt grade paint is from 8 × 10³ centipoise to 13 × 10³ centipoise, measured after being allowed to stand for 5 minutes, and is from 12 × 10³ centipoise to 18 × 10³ centipoise, measured after being allowed to stand for an hour, the solids content of the paint is within the range 35 - 55% w/w, and the specific gravity of the paint is within the range 1.3 - 1.6.

8. A method according to any preceding claim, comprising blending the paint using a shear-mixer.

9. A method according to any preceding claim, comprising reducing the mean particle size of the paint by shear-mixing prior to the treating of step (b).

10. A method according to any preceding claim, wherein adjusting the pH comprises adding to the paint precursor alkaline clay and/or ground marble to alter its pH and blending the alkaline clay and/or ground marble into the paint precursor.

11. A method according to any preceding claim, wherein the odour reducing material comprises fuller's earth, attapulgite type clay or zeolites.

12. A method according to claim 11, wherein the odour-reducing material is present in the range 1 - 10% w/w.

13. A method according to any preceding claim, wherein adjusting the property or properties comprises adding to the paint precursor a material that alters the property, and blending the material into the paint precursor, and wherein
(i) the property, or one of the properties, is specific gravity and the material is particulate solid matter, thicker paint, thinner paint and/or water, or
(ii) the property, or one of the properties, is solids content and the material is one or more of clay and calcium carbonate, or
(iii) the property, or one of the properties, is viscosity and the material is clay, cellulose or derivatives thereof, ground marble, acrylic, triethanolamine, ammonium hydroxide, NaOH, calcium carbonate and/or KOH.

14. A method according to any preceding claim, comprising adding one or more preservatives, wherein the preservatives comprise an antibacterial agent.

15. Paint obtainable according to claim 12, comprising one or more odour producing paint breakdown products and one or more odour-reducing agents.

## Patentansprüche

1. Verfahren zum Recycling von Emulsionsabfallfarbe zur Herstellung von verwendbarer Farbe, die folgenden Schritte umfassend:
(a) Bereitstellen eines Farbvorläufers, der abgebaute Farbe umfasst; und
(b) Behandeln des Farbvorläufers durch:
Testen des pH-Wertes des Farbvorläufers und gegebenenfalls Anpassen des pH-Wertes, sodass er innerhalb eines vorbestimmten Bereichs von 7,5 bis 10 liegt;
Hinzufügen eines geruchsreduzierenden Materials, das aus Ton und/oder Talk ausgewählt ist, in einer Menge von 0,5 - 30 Gew.-%;
Testen der Viskosität des Farbvorläufers und gegebenenfalls Anpassen der Viskosität, sodass sie innerhalb der folgenden Bereiche liegt, wenn unter Verwendung eines Brookfield DV-II-Viskosimeters gemessen, das mit einer LV-4-Spindel installiert ist, die sich mit 0,6 Umdrehungen pro Minute dreht,
für matte Farbe von 5,5 × 10³ Centipoise bis 13 × 10³ Centipoise, gemessen, nachdem der Farbvorläufer 5 Minuten stehen darf, und von 12 × 10³ Centipoise bis 22 × 10³ Centipoise, gemessen, nachdem der Farbvorläufer eine Stunde stehen darf;
für Seiden-/Weichglanzfarbe von 2 × 10³ Centipoise bis 4 × 10³ Centipoise, gemessen, nachdem der Farbvorläufer 5 Minuten stehen darf, und von 4 × 10³ Centipoise bis 9 × 10³ Centipoise, gemessen, nachdem der Farbvorläufer eine Stunde stehen darf;
für eine alternative Farbe mit Seiden-/Weichglanzqualität von 5 × 10³ Centipoise bis 10 × 10³ Centipoise, gemessen, nachdem der Farbvorläufer 5 Minuten stehen darf, und von 10 × 10³ Centipoise bis 15 × 10³ Centipoise, gemessen, nachdem der Farbvorläufer eine Stunde stehen darf; und
Testen von einer oder mehrerer der folgenden Eigenschaften des Farbvorläufers und gegebenenfalls Anpassen der Eigenschaft oder Eigenschaften, um innerhalb eines vorbestimmten Bereichs zu liegen:
(i) spezifisches Gewicht und;
(ii) Feststoffgehalt,
wobei der vorbestimmte Bereich für spezifisches Gewicht 1 bis 2 ist und der vorbestimmte Bereich für Feststoffgehalt 20 Gew.-% bis 55 Gew.-% ist;
wodurch zumindest eines von dem pH-Wert, dem spezifischen Gewicht, dem Feststoffgehalt und der Viskosität des Farbvorläufers angepasst wird, wodurch Farbe erzeugt wird.

2. Verfahren nach Anspruch 1, wobei die Opazität des Farbvorläufers getestet und gegebenenfalls angepasst wird, wodurch Farbe erzeugt wird.

3. Verfahren nach einem vorhergehenden Anspruch, umfassend einen vorausgehenden Schritt der Behandlung des Farbvorläufers mit einem pH-Anpasser zwischen 1 Gew.-% und 5 Gew.-%.

4. Verfahren nach Anspruch 3, wobei der vorausgehende Schritt der Behandlung des Farbvorläufers mit pH-Anpasser vor pH-Testen durchgeführt wird.

5. Verfahren nach einem vorhergehenden Anspruch, wobei das Verfahren zur Herstellung von matter Farbe ist und wobei der vorbestimmte Bereich für das spezifische Gewicht der matten Farbe 1,3 - 1,6 ist.

6. Verfahren nach einem vorhergehenden Anspruch, wobei das Verfahren zur Herstellung von matter Farbe ist und wobei der vorbestimmte Bereich für den Feststoffgehalt der matten Farbe 35 - 55 Gew.-% ist.

7. Verfahren nach einem vorhergehenden Anspruch, wobei das Verfahren zur Herstellung von matter Farbe ist und wobei der vorbestimmte Bereich für die Viskosität der matten Farbe 8 × 10³ Centipoise bis 13 × 10³ Centipoise ist, gemessen, nachdem sie 5 Minuten stehen darf, und 12 × 10³ Centipoise bis 18 × 10³ Centipoise ist, gemessen, nachdem sie eine Stunde stehen darf, wobei der Feststoffgehalt der Farbe innerhalb des Bereichs von 35 - 55 Gew.-% ist und das spezifische Gewicht der Farbe innerhalb des Bereichs von 1,3 - 1,6 ist.

8. Verfahren nach einem vorhergehenden Anspruch, umfassend das Mischen der Farbe unter Verwendung eines Schermischers.

9. Verfahren nach einem vorhergehenden Anspruch, umfassend das Reduzieren der mittleren Partikelgröße der Farbe durch Schermischen vor dem Behandeln von Schritt (b).

10. Verfahren nach einem vorhergehenden Anspruch, wobei das Anpassen des pH-Wertes das Hinzufügen von alkalischem Ton und/oder gemahlenem Marmor zu dem Farbvorläufer, um seinen pH-Wert zu verändern, und das Mischen des alkalischen Tons und/oder gemahlenen Marmors in den Farbvorläufer umfasst.

11. Verfahren nach einem vorhergehenden Anspruch, wobei das geruchsreduzierende Material Fullererde, Ton vom Attapulgit-Typ oder Zeolithe umfasst.

12. Verfahren nach Anspruch 11, wobei das geruchsreduzierende Material in dem Bereich von 1 - 10 Gew.-% vorhanden ist.

13. Verfahren nach einem vorhergehenden Anspruch, wobei das Anpassen der Eigenschaft oder der Eigenschaften das Hinzufügen eines Materials zu dem Farbvorläufer, das die Eigenschaft verändert, und das Mischen des Materials in den Farbvorläufer umfasst, und wobei
(i) die Eigenschaft oder eine der Eigenschaften spezifisches Gewicht ist und das Material partikelförmiger Feststoff, dickere Farbe, dünnere Farbe und/oder Wasser ist, oder
(ii) die Eigenschaft oder eine der Eigenschaften Feststoffgehalt ist und das Material eines oder mehrere von Ton und Calciumcarbonat ist, oder
(iii) die Eigenschaft oder eine der Eigenschaften Viskosität ist und das Material Ton, Cellulose oder Derivate davon, gemahlener Marmor, Acryl, Triethanolamin, Ammoniumhydroxid, NaOH, Calciumcarbonat und/oder KOH ist.

14. Verfahren nach einem vorhergehenden Anspruch, umfassend das Hinzufügen von einem oder mehreren Konservierungsmitteln, wobei die Konservierungsmittel ein antibakterielles Mittel umfassen.

15. Farbe, die nach Anspruch 12 erhaltbar ist, umfassend ein oder mehrere geruchserzeugende Farbabbauprodukte und ein oder mehrere geruchsreduzierende Mittel.

## Revendications

1. Procédé de recyclage de déchets de peinture à émulsion destiné à la fabrication d'une peinture utilisable, comprenant les étapes suivantes :
(a) fourniture d'un précurseur de peinture, comprenant une peinture dégradée ; et
(b) traitement du précurseur de peinture par :
évaluation du pH du précurseur de peinture et, si besoin, ajustement du pH pour qu'il repose dans les limites d'une plage prédéterminée de 7,5 à 10 ;
ajout d'un matériau réducteur d'odeur choisi parmi l'argile, et/ou le talc en une quantité allant de 0,5 à 30 % p/p ;
évaluation de la viscosité du précurseur de peinture et, si besoin, ajustement de la viscosité pour qu'elle repose dans les limites des plages suivantes, quand elle est mesurée à l'aide d'un viscosimètre Brookfield DV-II équipé d'une tige LV-4 tournant à 0,6 révolution par minute,
pour une peinture de qualité mate, allant de 5,5 × 10³ centipoises à 13 × 10³ centipoises, mesurée après avoir laissé le précurseur de peinture à reposer pendant 5 minutes et allant de 12 × 10³ centipoises à 22 × 10³ centipoises, mesurée après avoir laissé le précurseur de peinture à reposer pendant une heure ;
pour une peinture de qualité satinée/lustrée, allant de 2 × 10³ centipoises à 4 × 10³ centipoises, mesurée après avoir laissé le précurseur de peinture à reposer pendant 5 minutes, et allant de 4 × 10³ centipoises à 9 × 10³ centipoises, mesurée après avoir laissé le précurseur de peinture à reposer pendant une heure ;
pour une variante de peinture de qualité satinée/lustrée, de 5 × 10³ centipoises à 10 × 10³ centipoises, mesurée après avoir laissé le précurseur de peinture à reposer pendant 5 minutes et allant de 10 × 10³ centipoises à 15 × 10³ centipoises, mesurée après avoir laissé le précurseur de peinture à reposer pendant une heure ; et
évaluation d'une ou de plusieurs des propriétés suivantes du précurseur de peinture et, si besoin, ajustement de la propriété ou des propriétés pour qu'elles reposent dans les limites d'une plage prédéterminée :
(i) densité relative et ;
(ii) teneur en solides,
par quoi la plage prédéterminée pour la densité relative va de 1 à 2 et la plage prédéterminée pour la teneur en solides va de 20 % p/p à 55 % p/p ;
par quoi au moins l'un du pH, de la densité relative, de la teneur en solide et de la viscosité du précurseur de peinture est ajusté, produisant ainsi de la peinture.

2. Procédé selon la revendication 1, par quoi l'opacité du précurseur de peinture est évaluée et, si besoin, ajustée, produisant ainsi de la peinture.

3. Procédé selon l'une quelconque des revendications précédentes, comprenant une étape préliminaire de traitement du précurseur de peinture avec entre 1 % p/p et 5 % p/p d'un ajusteur de pH.

4. Procédé selon la revendication 3, dans lequel l'étape préliminaire de traitement du précurseur de peinture avec un ajusteur de pH est réalisée avant l'évaluation du pH.

5. Procédé selon l'une quelconque des revendications précédentes, dans lequel le procédé est destiné à la fabrication d'une peinture de qualité mate et dans lequel la plage prédéterminée pour la densité relative de la peinture de qualité mate va de 1,3 à 1,6.

6. Procédé selon l'une quelconque des revendications précédentes, dans lequel le procédé est destiné à la fabrication d'une peinture de qualité mate et dans lequel la plage prédéterminée pour la teneur en solides de la peinture de qualité mate va de 35 à 55 % p/p.

7. Procédé selon l'une quelconque des revendications précédentes, dans lequel le procédé est destiné à la fabrication d'une peinture de qualité mate et dans lequel la plage prédéterminée pour la viscosité de la peinture de qualité mate va de 8 × 10³ centipoises à 13 × 10³ centipoises, mesurée après l'avoir laissée à reposer pendant 5 minutes, et va de 12 × 10³ centipoises à 18 × 10³ centipoises, mesurée après l'avoir laissée à reposer pendant une heure, la teneur en solides de la peinture est comprise dans la plage de 35 à 55 % p/p, et la densité relative de la peinture est comprise dans les limites de la plage de 1,3 à 1,6.

8. Procédé selon l'une quelconque des revendications précédentes, comprenant le mélange de la peinture à l'aide d'un mélangeur à cisaillement.

9. Procédé selon l'une quelconque des revendications précédentes, comprenant la réduction de la taille moyenne des particules de la peinture par mélange à cisaillement avant le traitement de l'étape (b).

10. Procédé selon l'une quelconque des revendications précédentes, dans lequel l'ajustement du pH comprend l'ajout au précurseur de peinture d'argile alcaline et/ou de marbre pilé pour modifier son pH et le mélange de l'argile alcaline et/ou du marbre pilé dans le précurseur de peinture.

11. Procédé selon l'une quelconque des revendications précédentes, dans lequel le matériau réducteur d'odeur comprend la terre à foulon, l'argile de type attapulgite ou des zéolites.

12. Procédé selon la revendication 11, dans lequel le matériau réducteur d'odeur est présent dans la plage de 1 à 10 % p/p.

13. Procédé selon l'une quelconque des revendications précédentes, dans lequel l'ajustement de la propriété ou des propriétés comprend l'ajout au précurseur de peinture d'un matériau qui modifie la propriété, et le mélange du matériau dans le précurseur de peinture, et dans lequel
(i) la propriété, ou l'une des propriétés, est la densité relative et le matériau est une matière solide particulaire, une peinture plus épaisse, une peinture plus liquide et/ou de l'eau, ou
(ii) la propriété, ou l'une des propriétés, est la teneur en solides et le matériau est l'un ou plusieurs parmi l'argile et le carbonate de calcium, ou
(iii) la propriété, ou l'une des propriétés, est la viscosité et le matériau est l'argile, la cellulose ou des dérivés de celle-ci, le marbre pilé, l'acrylique, la triéthanolamine, l'hydroxyde d'ammonium, le NaOH, le carbonate de calcium et/ou le KOH.

14. Procédé selon l'une quelconque des revendications précédentes, comprenant l'ajout d'un ou de plusieurs conservateurs, dans lequel les conservateurs comprennent un agent antibactérien.

15. Peinture pouvant être obtenue selon la revendication 12, comprenant un ou plusieurs produits de dégradation d'une peinture produisant une odeur et un ou plusieurs agents réducteurs d'odeur.
